# EUROPEAN PATENT SPECIFICATION

(11) **EP 3 324 473 B1**
(45) Date of publication and mention of the grant of the patent: **12.06.2019**
(21) Application number: 17200951.6
(22) Date of filing: 10.11.2017
(51) Int. Cl.: H01M 8/1213, C04B 35/48, H01M 8/1246, H01M 4/90, C01G 25/00, C01G 49/00, C01G 51/00, C01G 53/00, C25B 1/04, H01B 1/08, H01M 8/124

(54) **MEMBRANE ELECTRODE ASSEMBLY AND SOLID OXIDE FUEL CELL**
MEMBRANE-ELEKTRODEN-ANORDNUNG UND FESTOXIDBRENNSTOFFZELLE
ENSEMBLE ÉLECTRODE À MEMBRANE ET PILE À COMBUSTIBLE À OXYDE SOLIDE

(30) Priority: 17.11.2016 JP 2016224088
(43) Date of publication of application: 23.05.2018
(73) Proprietor: Panasonic Intellectual Property Management Co., Ltd., Osaka-shi, Osaka 540-6207 (JP)
(72) Inventor: MIKAMI, Yuichi, Osaka-shi, Osaka 540-6207 (JP); GOTO, Takehito, Osaka-shi, Osaka 540-6207 (JP); YAMAUCHI, Kosuke, Osaka-shi, Osaka 540-6207 (JP); KAMATA, Tomoya, Osaka-shi, Osaka 540-6207 (JP); KUROHA, Tomohiro, Osaka-shi, Osaka 540-6207 (JP); TSUJI, Yoichiro, Osaka-shi, Osaka 540-6207 (JP)
(74) Representative: Grünecker Patent- und Rechtsanwälte PartG mbB

(56) References cited:
- EP-A1- 2 908 371
- KR-A- 20150 081 928
- US-A1- 2015 044 596

## Description

### BACKGROUND

### 1. Technical Field

The present disclosure relates to a membrane electrode assembly and a solid oxide fuel cell for use in an electrochemical device.

### 2. Description of the Related Art

Solid oxide fuel cells are known as one of electrochemical devices including electrolyte materials formed of solid oxides. In general, oxide ionic conductors, typically stabilized zirconia, are widely used as electrolyte materials for solid oxide fuel cells. Oxide ionic conductors have lower ionic conductivity at lower temperature. Because of this property, for example, solid oxide fuel cells that include stabilized zirconia as an electrolyte material need to operate at temperatures of 700°C or higher.

However, when electrochemical devices that include an electrolyte material formed of a solid oxide, such as solid oxide fuel cells, operate at high temperatures, an expensive special heat-resistant metal is needed for a metal material used in the structural component. The use of such a metal increases the costs of the entire system and tends to result in cracks when starting and stopping the system because of differences in thermal expansion between the structural components, which causes problems associated with low reliability of the entire system. Therefore, a common practical approach for using electrochemical devices is to lower their operating temperature.

A solid electrolyte stacked body that permits operation at low temperatures and includes a solid electrolyte having proton conductivity has been proposed (e.g., Patent Literature 1, Japanese Patent No. 5936898). More specifically, Patent Literature 1 discloses a solid electrolyte layer stacked body that includes a solid electrolyte layer formed of yttrium-doped barium zirconate (BZY) and a cathode electrode layer formed of a lanthanum strontium cobalt compound (LSC).

US 2015/044596 A1 relates to a solid electrolyte stacked body that permits operation at low temperatures and includes a solid electrolyte having proton conductivity, wherein the electrolyte layer stock body includes a solid electrolyte layer formed of yttrium-doped barium zirconate, and a cathode electrode layer formed of a lanthanum strontium cobalt compound.

EP 2908371 A1 discloses a fuel cell that generates power from a hydrogen-containing fuel gas and air by an electrochemical reaction, the fuel cell comprising a membrane electrode assembly including a fuel electrode, a solid electrolyte and an air electrode.

KR 2015-0081928 A relates to a hydrogen ion conducting solid oxide fuel cell and a manufacturing method thereof.

### SUMMARY

The present invention provides a membrane electrode assembly and a solid oxide fuel cell that achieve improved power-generation efficiency.

In one general aspect, the techniques disclosed here feature a membrane electrode assembly that includes an electrode consisting of at least one compound selected from the group consisting of lanthanum strontium cobalt complex oxide, lanthanum strontium cobalt iron complex oxide, and lanthanum strontium iron complex oxide, or consisting of a composite of the at least one compound and an electrolyte material, and a first solid electrolyte membrane represented by a composition formula of BaZr₁₋ₓLuₓO_{3-δ} (with x = 0.2 and δ = 0.1). The electrode is in contact with the first solid electrolyte membrane.

The membrane electrode assembly the present disclosure has the above-described structure and thus has an effect of improving power-generation efficiency.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a schematic diagram illustrating the structure of a membrane electrode assembly according to a first embodiment of the present disclosure;
Fig. 2 is a schematic diagram illustrating the structure of a membrane electrode assembly according to a second embodiment of the present disclosure;
Fig. 3 is a schematic diagram illustrating an example of the structure of a membrane electrode assembly according to a third embodiment of the present disclosure;
Fig. 4 is a schematic diagram illustrating an example of the structure of a membrane electrode assembly according to a modification of the third embodiment of the present disclosure;
Fig. 5 is a schematic diagram illustrating the structure of an evaluation membrane electrode assembly according to Examples of the present disclosure;
Fig. 6 is a diagram illustrating an example of the measurement result of the alternating-current impedance according to Examples of the present disclosure by using the Cole-Cole plot;
Fig. 7 illustrates a graph showing an example of the correlation between the IR resistance and the thickness of a first solid electrolyte membrane according to Examples and Comparative Examples of the present disclosure; and
Fig. 8 illustrates a table showing the contact resistance in Examples 1 to 3 of the present disclosure and the contact resistance in Comparative Examples 1 to 7.

### DETAILED DESCRIPTION

### Underlying Knowledge Forming Basis of the Present Disclosure

The inventors of the present disclosure have diligently studied the related solid electrolyte layer stacked body (membrane electrode assembly) disclosed in Patent Literature 1. As a result, the following finding has been obtained. That is, the inventors have devised a membrane electrode assembly that provides higher power-generation efficiency than the membrane electrode assembly disclosed in Patent Literature 1 when used in an electrochemical device.

Specifically, the inventors have found that there is a problem in which high power-generation efficiency is not obtained when a membrane electrode assembly in an electrochemical device, as disclosed in Patent Literature 1, includes a combination of an electrode formed of a lanthanum strontium cobalt compound (hereinafter referred to as LSC) and a solid electrolyte membrane represented by BaZr₁₋ₓYₓO_{3-δ}. Therefore, the inventors have diligently studied combinations of an electrode and a solid electrolyte membrane that provide high power-generation efficiency and, as a result, the present disclosure has been made.

First, the inventors have studied the power-generation efficiency for membrane electrode assemblies obtained by replacing the electrode in the structure of the membrane electrode assembly of Patent Literature 1 with an electrode consisting of any one of lanthanum strontium cobalt iron complex oxide (hereinafter referred to as LSCF), which has often been reported as a cathode material, and lanthanum strontium iron complex oxide (hereinafter referred to as LSF).

Specifically, the inventors have studied the power-generation efficiency for membrane electrode assemblies obtained by replacing the solid electrolyte membrane (BaZr₁₋ₓYₓO_{3-δ}) in the membrane electrode assembly of Patent Literature 1 with a solid electrolyte membrane having a different composition and replacing the electrode with an electrode consisting of at least one compound selected from the group consisting of LSC, LSCF, and LSF.

As a result of these studies, it has been found that, when a membrane electrode assembly includes a combination of an electrode containing at least one compound selected from the group consisting of LSC, LSCF, and LSF, and a solid electrolyte represented by a composition formula of BaZr₁₋ₓLuₓO_{3-δ} (with x = 0.2 and δ = 0.1), the membrane electrode assembly provides higher power-generation efficiency than the membrane electrode assembly of Patent Literature 1. It has also been found that the above-described membrane electrode assembly provides higher power-generation efficiency than membrane electrode assemblies obtained by replacing the electrode in the structure of the membrane electrode assembly of Patent Literature 1 with an electrode consisting of at least one compound selected from the group consisting of LSC, LSCF, and LSF.

This is probably because the contact resistance, which is a resistance between the electrode and the solid electrolyte membrane, is lower in a membrane electrode assembly including a combination of an electrode consisting of at least one compound selected from the group consisting of LSC, LSCF, and LSF and a solid electrolyte represented by a composition formula of BaZr₁₋ₓLuₓO_{3-δ} (with x = 0.2 and δ = 0.1) than in the membrane electrode assembly disclosed in Patent Literature 1 and other membrane electrode assemblies. This may result in a low ohmic resistance (IR resistance) of the entire membrane electrode assembly.

The above-mentioned finding, which was first revealed by the inventors, has novel technical features that enable new challenges to be identified and significant operational advantages to be realized. Specifically, the present disclosure provides the aspects described below.

A membrane electrode assembly according to a first aspect of the present disclosure includes an electrode consisting of at least one compound selected from the group consisting of lanthanum strontium cobalt complex oxide, lanthanum strontium cobalt iron complex oxide, and lanthanum strontium iron complex oxide or consisting of a composite of the at least one compound and an electrolyte material, and a first solid electrolyte membrane represented by a composition formula of BaZr₁₋ₓLuₓO_{3-δ} (with x = 0.2 and δ =0.1). The electrode is in contact with the first solid electrolyte membrane.

In the membrane electrode assembly according to the first aspect of the present disclosure having the above-mentioned structure, the electrode consisting of the at least one compound or consisting of a composite of the at least one compound and an electrolyte material is in contact with the first solid electrolyte membrane represented by a composition formula of BaZr₁₋ₓLuₓO_{3-δ} (with x = 0.2 and δ = 0.1). This structure can reduce the contact resistance between the electrode and the first solid electrolyte membrane. As a result, this structure can reduce the resistance of the entire membrane electrode assembly. Therefore, the membrane electrode assembly according to the first aspect of the present disclosure has an effect of improving power-generation efficiency.

In a membrane electrode assembly according to a second aspect of the present disclosure, the membrane electrode assembly according to the first aspect further includes a second solid electrolyte membrane represented by BaZr₁₋ₓ₁M¹ₓ₁O_{3-δ} where M¹ represents at least one element selected from the group consisting of La, Pr, Nd, Pm, Sm, Eu, Gd, Tb, Dy, Ho, Er, Tm, Yb, Y, Sc, Mn, Fe, Co, Ni, Al, and Ga, and x₁ satisfies 0 < x₁ < 1. The first solid electrolyte membrane may have a first surface in contact with the electrode and a second surface, which is a surface opposite to the first surface, in contact with the second solid electrolyte membrane. The electrode, the first solid electrolyte membrane, and the second solid electrolyte membrane may be stacked in this order.

According to the above-described structure, the solid electrolyte membrane in contact with the electrode is the first solid electrolyte membrane. This structure can reduce the contact resistance between the electrode and the first solid electrolyte membrane. Furthermore, when a solid electrolyte membrane includes a first solid electrolyte membrane and a second solid electrolyte membrane having higher conductivity than the first solid electrolyte membrane, the solid electrolyte membrane has higher conductivity than a solid electrolyte membrane composed only of the first solid electrolyte membrane, provided that these solid electrolyte membranes have the same thickness. Therefore, the membrane electrode assembly according to the second aspect of the present disclosure can improve power-generation efficiency.

In addition, when the solid electrolyte membrane is composed only of the first solid electrolyte membrane and, for example, a member that produces large contact resistance in the interface between the member and the first solid electrolyte membrane represented by BaZr₁₋ₓLuₓO_{3-δ} (with x = 0.2 and δ = 0.1) needs to be disposed on the second surface of the first solid electrolyte membrane opposite to the first surface in contact with the electrode, the efficiency of the electrochemical device may deteriorate. However, the membrane electrode assembly according to the second aspect of the present disclosure includes the second solid electrolyte membrane disposed on the second surface of the first solid electrolyte membrane. Therefore, when a member that produces large contact resistance in the interface between the member and BaZr₁₋ₓLuₓO_{3-δ} (with x = 0.2 and δ = 0.1) needs to be disposed on the second surface of the first solid electrolyte membrane, the member can be prevented from being disposed directly on the first solid electrolyte membrane, which can suppress decreases in the efficiency of the electrochemical device.

In a membrane electrode assembly according to a third aspect of the present disclosure, the electrode in the membrane electrode assembly according to the first aspect is a cathode electrode, and the membrane electrode assembly according to the first aspect further includes an anode electrode containing Ni and a compound represented by any one composition formula selected from the group consisting of BaZr₁₋ₓ₂M²ₓ₂O_{3-δ}, BaCe₁₋ₓ₃M³ₓ₃O_{3-δ}, and BaZr_{1-x4-y4}Ceₓ₄M⁴_{y4}O_{3-δ}, where M², M³, and M⁴ each represent at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu, and x₂, x₃, x₄, and y₄ satisfy 0 < x₂ < 1, 0 < x₃ < 1, 0 < x₄ < 1, and 0 < y₄ < 1, respectively. The first solid electrolyte membrane has a first surface in contact with the cathode electrode and a second surface, which is a surface opposite to the first surface, in contact with the anode electrode. The cathode electrode, the first solid electrolyte membrane, and the anode electrode are stacked in this order.

According to this structure, the electrode consisting of the at least one compound or consisting of the at least one compound and an electrolyte material, namely, the cathode electrode, is in contact with the first solid electrolyte membrane represented by a composition formula of BaZr₁₋ₓLuₓO_{3-δ} (with x = 0.2 and δ = 0.1). This structure can reduce the contact resistance between the cathode electrode and the first solid electrolyte membrane and, as a result, can reduce the resistance of the entire membrane electrode assembly including the cathode electrode, the first solid electrolyte membrane, and the anode electrode. Therefore, the membrane electrode assembly according to the third aspect of the present disclosure can improve power-generation efficiency.

In a membrane electrode assembly according to a fourth aspect of the present disclosure, the electrode in the membrane electrode assembly according to the second aspect may be a cathode electrode, and the membrane electrode assembly according to the second aspect may further include an anode electrode containing Ni and a compound represented by any one composition formula selected from BaZr₁₋ₓ₂M²ₓ₂O_{3-δ}, BaCe₁₋ₓ₃M³ₓ₃O_{3-δ}, and BaZr_{1-x4-y4}Ceₓ₄M⁴_{y4}O_{3-δ} where M², M³, and M⁴ each represent at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu, and x₂, x₃, x₄, and y₄ satisfy 0 < x₂ < 1, 0 < x₃ < 1, 0 < x₄ < 1, and 0 < y₄ < 1, respectively. The second solid electrolyte membrane may have a first surface in contact with the first solid electrolyte membrane and a second surface, which is a surface opposite to the first surface, in contact with the anode electrode. The cathode electrode, the first solid electrolyte membrane, the second solid electrolyte membrane, and the anode electrode may be stacked in this order.

According to this structure, the cathode electrode consisting of the at least one compound or consisting of the at least one compound and an electrolyte material is in contact with the first solid electrolyte membrane represented by a composition formula of BaZr₁₋ₓLuₓO_{3-δ} (with x = 0.2 and δ = 0.1). This structure can reduce the contact resistance between the cathode electrode and the first solid electrolyte membrane. Furthermore, when a solid electrolyte membrane includes a first solid electrolyte membrane and a second solid electrolyte membrane having higher conductivity than the first solid electrolyte membrane, the solid electrolyte membrane has higher conductivity than a solid electrolyte membrane composed only of the first solid electrolyte membrane, provided that these solid electrolyte membranes have the same thickness.

Therefore, the membrane electrode assembly according to the fourth aspect of the present disclosure achieves low resistance of the entire membrane electrode assembly including the cathode electrode, the first solid electrolyte membrane, the second solid electrolyte membrane, and the anode electrode, and can improve power-generation efficiency.

A solid oxide fuel cell according to a fifth aspect of the present disclosure includes an electrode consisting of at least one compound selected from the group consisting of lanthanum strontium cobalt complex oxide, lanthanum strontium cobalt iron complex oxide, and lanthanum strontium iron complex oxide, or consisting of a composite of the at least one compound and an electrolyte material, and a first solid electrolyte membrane represented by a composition formula of BaZr₁₋ₓLuₓO_{3-δ} (with x = 0.2 and δ = 0.1). The electrode is in contact with the first solid electrolyte membrane.

This structure can reduce the resistance of the entire membrane electrode assembly. Therefore, the solid oxide fuel cell according to the fifth aspect of the present disclosure has high power-generation efficiency.

Embodiments of the present disclosure will be described below with reference to the drawings. Hereinafter, the same or corresponding structural components are provided with the same reference symbols throughout the figures, and the description thereof may be omitted.

### First Embodiment

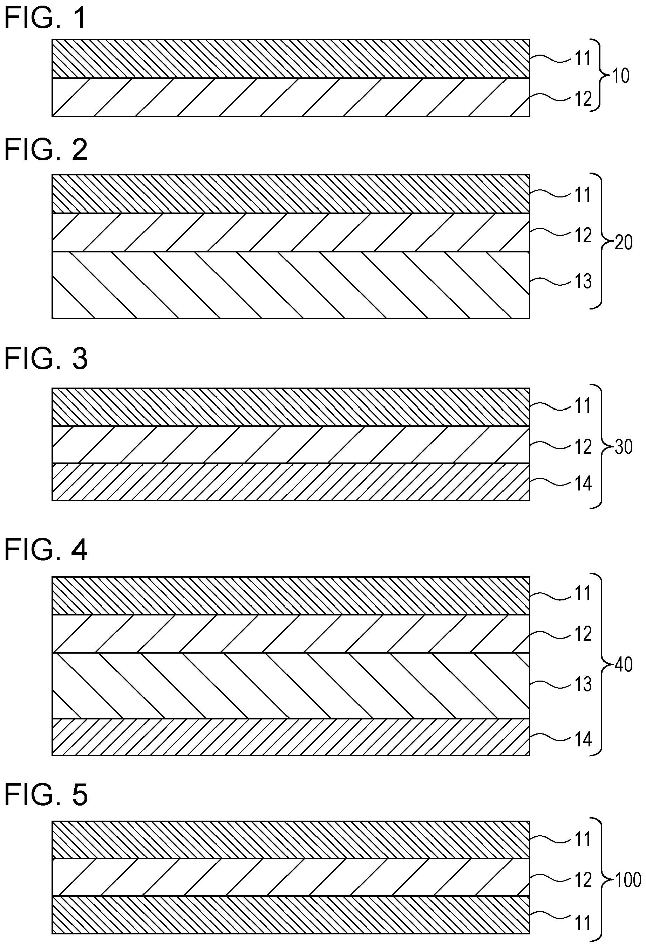

A membrane electrode assembly 10 according to a first embodiment of the present disclosure will be described with reference to Fig. 1. Fig. 1 is a schematic diagram illustrating the structure of the membrane electrode assembly 10 according to the first embodiment of the present disclosure. The membrane electrode assembly 10 is a member for use in an electrochemical device. As illustrated in Fig. 1, the membrane electrode assembly 10 includes an electrode 11 and a first solid electrolyte membrane 12. The electrode 11 is in contact with the first solid electrolyte membrane 12. In other words, the membrane electrode assembly 10 has a stacked structure including the electrode 11 and the first solid electrolyte membrane 12 having a first surface in contact with the electrode 11.

The electrode 11 is formed by using an oxide ion-electron mixed conductor consisting of at least one compound selected from the group consisting of lanthanum strontium cobalt complex oxide (LSC), lanthanum strontium cobalt iron complex oxide (LSCF), and lanthanum strontium iron complex oxide (LSF). That is, the electrode 11 may be formed only of the above-mentioned compound (oxide ion-electron mixed conductor) or may be formed of a combination of the above-mentioned compounds (oxide ion-electron mixed conductors). Furthermore, the electrode 11 may be formed of, for example, a composite of the above-mentioned compound (oxide ion-electron mixed conductor) and an electrolyte material (e.g., BaZr₁₋ₓLuₓO_{3-δ}). When the electrode 11 is used, for example, as a cathode electrode for a solid oxide fuel cell, the electrochemical reduction reaction of oxygen in a gas phase occurs. Because of this, the electrode 11 may be a porous body to ensure paths through which oxygen diffuses and to promote the reaction.

The first solid electrolyte membrane 12 has a composition represented by BaZr₁₋ₓLuₓO_{3-δ} (with x = 0.2 and δ = 0.1), which has proton conductivity. When the molar ratio of Zr to Lu is 8:2, BaZr₁₋ₓLuₓO_{3-δ} has a proton conductivity of about 8.0 x 10⁻³ S/cm at 600°C. When the first solid electrolyte membrane 12 is used as a solid electrolyte membrane of the membrane electrode assembly 10 in an electrochemical device, it is possible to minimize the thickness of the first solid electrolyte membrane 12 in order to reduce the ohmic resistance (IR resistance) of the first solid electrolyte membrane 12.

When an electrochemical device that includes the membrane electrode assembly 10 is, for example, a solid oxide fuel cell, power is produced by supplying air to the first surface of the first solid electrolyte membrane 12 having the electrode 11 and supplying a hydrogen-containing gas to the second surface having no electrode 11. Therefore, when the electrochemical device is a solid oxide fuel cell, the first solid electrolyte membrane 12 needs to be gas-tight.

Since the membrane electrode assembly 10 according to the first embodiment has a structure in which the electrode 11 is stacked on the first surface of the first solid electrolyte membrane 12, the contact resistance, which is a resistance between the electrode 11 and the first solid electrolyte membrane 12, is low. This structure can improve the power-generation efficiency of electrochemical devices, such as solid oxide fuel cells.

### Second Embodiment

A membrane electrode assembly 20 according to a second embodiment of the present disclosure will be described with reference to Fig. 2. Fig. 2 is a schematic diagram illustrating the structure of the membrane electrode assembly 20 according to the second embodiment of the present disclosure. The membrane electrode assembly 20 includes an electrode 11, a first solid electrolyte membrane 12, and a second solid electrolyte membrane 13. In the membrane electrode assembly 20, the electrode 11, the first solid electrolyte membrane 12, and the second solid electrolyte membrane 13 are stacked in this order. In other words, the first solid electrolyte membrane 12 has a first surface in contact with the electrode 11 and a second surface, which is a surface opposite to the first surface, in contact with the second solid electrolyte membrane 13. That is, in the membrane electrode assembly 20 according to the second embodiment, the membrane electrode assembly 10 according to the first embodiment further includes the second solid electrolyte membrane 13.

The electrode 11 in the membrane electrode assembly 20 according to the second embodiment, as in the first embodiment, is formed by using an oxide ion-electron mixed conductor that is at least one compound selected from the group consisting of lanthanum strontium cobalt complex oxide (LSC), lanthanum strontium cobalt iron complex oxide (LSCF), and lanthanum strontium iron complex oxide (LSF). The electrode 11 may be formed only of the above-mentioned compound (oxide ion-electron mixed conductor) or may be formed of a combination of the above-mentioned compounds (oxide ion-electron mixed conductors). Furthermore, the electrode 11 may be formed of, for example, a composite of a compound (oxide ion-electron mixed conductor) and an electrolyte material (e.g., BaZr₁₋ₓLuₓO_{3-δ}). When the electrode 11 is used, for example, as a cathode electrode for a solid oxide fuel cell, the electrochemical reduction reaction of oxygen in a gas phase occurs, as in the first embodiment. Because of this, the electrode 11 may be a porous body to ensure paths through which oxygen diffuses and to promote the reaction.

Like the first solid electrolyte membrane 12 according to the first embodiment, the first solid electrolyte membrane 12 has a composition represented by BaZr₁₋ₓLuₓO_{3-δ} (with x = 0.2 and δ = 0.1) having proton conductivity. The second solid electrolyte membrane 13 is a proton conductor represented by a composition formula of BaZr₁₋ₓ₁M¹ₓ₁O_{3-δ} where M¹ represents at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, and In, and x₁ satisfies 0 < x₁ < 1. In the membrane electrode assembly 20 according to the second embodiment of the present disclosure, both the first solid electrolyte membrane 12 and the second solid electrolyte membrane 13 may be formed to have a reduced thickness in order to reduce the IR resistance.

When the electrochemical device that includes the membrane electrode assembly 20 is, for example, a solid oxide fuel cell, power is produced in a stacked body including the electrode 11, the first solid electrolyte membrane 12, and the second solid electrolyte membrane 13 by supplying air to the electrode 11 side of the stacked body and a hydrogen-containing gas to the second solid electrolyte membrane 13 side of the stacked body. Since the electrode 11 is desirably a porous body, at least one of the first solid electrolyte membrane 12 and the second solid electrolyte membrane 13 needs to be gas-tight.

In the second embodiment, the solid electrolyte membrane has a stacked structure including the first solid electrolyte membrane 12 and the second solid electrolyte membrane 13. The second solid electrolyte membrane 13 may be a proton conductor having higher proton conductivity than BaZr₁₋ₓLuₓO_{3-δ}, which is a proton conductor of the first solid electrolyte membrane 12. As the solid electrolyte membrane including a combination of the first solid electrolyte membrane 12 and the second solid electrolyte membrane 13 having higher proton conductivity than the first solid electrolyte membrane 12 is compared with a solid electrolyte membrane composed of the first solid electrolyte membrane 12, the former solid electrolyte membrane has higher proton conductivity than the latter solid electrolyte membrane, provided that these solid electrolyte membranes have the same thickness. To achieve good proton conductivity, it is possible to minimize the thickness of the first solid electrolyte membrane 12 having low proton conductivity. Even if the first solid electrolyte membrane 12 is too thin to maintain gas-tight properties, the second solid electrolyte membrane 13 can compensate for the gas-tight properties.

Therefore, the solid electrolyte membrane including a combination of the first solid electrolyte membrane 12 and the second solid electrolyte membrane 13 achieves low IR resistance and has an advantage of improving the power-generation efficiency of the electrochemical device compared with a solid electrolyte membrane composed of the first solid electrolyte membrane 12 having gas-tight properties.

In addition, when a member that produces large contact resistance in the interface between the member and the first solid electrolyte membrane 12 needs to be disposed on the second surface of the first solid electrolyte membrane 12 opposite to the first surface in contact with the electrode 11, the efficiency of the electrochemical device may deteriorate. However, the membrane electrode assembly 20 according to the second embodiment includes the second solid electrolyte membrane 13 disposed on the second surface of the first solid electrolyte membrane 12. With this structure, the member that produces large contact resistance in the interface between the member and BaZr₁₋ₓLuₓO_{3-δ} can be prevented from being disposed directly on the first solid electrolyte membrane 12. This can suppress decreases in the efficiency of the electrochemical device.

As described above, the membrane electrode assembly 20 according to the second embodiment has a structure in which the electrode 11, the first solid electrolyte membrane 12, and the second solid electrolyte membrane 13 are stacked in this order. As in the first embodiment, this structure can reduce the contact resistance between the electrode 11 and the first solid electrolyte membrane 12 and can improve the power-generation efficiency of electrochemical devices, such as fuel cells.

### Third Embodiment

A membrane electrode assembly 30 according to a third embodiment of the present disclosure will be described with reference to Fig. 3. Fig. 3 is a schematic diagram illustrating an example of the structure of the membrane electrode assembly 30 according to the third embodiment of the present disclosure. A membrane electrode assembly 40 according to a modification of the third embodiment of the present disclosure will be further described with reference to Fig. 4. Fig. 4 is a schematic diagram illustrating an example of the structure of the membrane electrode assembly 40 according to the modification of the third embodiment of the present disclosure.

As illustrated in Fig. 3, the membrane electrode assembly 30 according to the third embodiment includes an electrode 11, which is a cathode electrode, a first solid electrolyte membrane 12, and an anode electrode 14. In the membrane electrode assembly 30, the electrode 11 (cathode electrode), the first solid electrolyte membrane 12, and the anode electrode 14 are stacked in this order. In other words, in the membrane electrode assembly 30, the first solid electrolyte membrane 12 has a first surface in contact with the electrode 11 (cathode electrode) and a second surface in contact with the anode electrode 14. That is, in the membrane electrode assembly 30 according to the third embodiment, the membrane electrode assembly 10 according to the first embodiment further includes the anode electrode 14. The electrode 11 (cathode electrode) and the first solid electrolyte membrane 12 in the membrane electrode assembly 30 have structures similar to those of the electrode 11 and the first solid electrolyte membrane 12 in the membrane electrode assembly 10 according to the first embodiment, and thus description of these members is omitted. The anode electrode 14 will be described below in detail.

As illustrated in Fig. 4, the membrane electrode assembly 40 according to the modification of the third embodiment includes the electrode 11, which is a cathode electrode, the first solid electrolyte membrane 12, a second solid electrolyte membrane 13, and the anode electrode 14. In the membrane electrode assembly 40, the electrode 11 (cathode electrode), the first solid electrolyte membrane 12, the second solid electrolyte membrane 13, and the anode electrode 14 are stacked in this order. In other words, in the membrane electrode assembly 40, the first solid electrolyte membrane 12 has a first surface in contact with the electrode 11 (cathode electrode) and a second surface in contact with the second solid electrolyte membrane 13. The second solid electrolyte membrane 13 has a first surface in contact with the first solid electrolyte membrane and a second surface, which is a surface opposite to the first surface, in contact with the anode electrode 14.

That is, in the membrane electrode assembly 40 according to the modification of the third embodiment, the membrane electrode assembly 20 according to the second embodiment further includes the anode electrode 14. Otherwise, it can also be said that the membrane electrode assembly 30 according to the third embodiment further includes the second solid electrolyte membrane 13.

In the membrane electrode assembly 40, the electrode 11 (cathode electrode), the first solid electrolyte membrane 12, and the second solid electrolyte membrane 13 have structures similar to those of the electrode 11, the first solid electrolyte membrane 12, and the second solid electrolyte membrane 13 in the membrane electrode assembly 20 according to the second embodiment, and thus description of these members is omitted.

The anode electrode 14 may contain, for example, Ni and a compound having proton conductivity and represented by any one composition formula selected from BaZr₁₋ₓ₂M²ₓ₂O_{3-δ}, BaCe₁₋ₓ₃M³ₓ₃O_{3-δ}, and BaZr_{1-x4-y4}Ceₓ₄M⁴_{y4}O_{3-δ} where M², M³, and M⁴ each represent at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu, and x₂, x₃, x₄, and y₄ satisfy 0 < x₂ < 1, 0 < x₃ < 1, 0 < x₄ < 1, and 0 < y₄ < 1, respectively.

When the anode electrode 14 is used as, for example, an anode electrode in a solid oxide fuel cell, the oxidation reaction of hydrogen in a gas phase into protons occurs in the anode electrode 14. Because of this, the anode electrode 14 may be formed of a composite of Ni having electron conductivity and a hydrogen-oxidizing activity and the compound having proton conductivity in order to promote the oxidation reaction of hydrogen into protons. The anode electrode 14 may be a porous body to ensure paths through which hydrogen gas diffuses.

As described above, the membrane electrode assembly 30 according to the third embodiment has a structure in which the electrode 11, the first solid electrolyte membrane 12, and the anode electrode 14 are stacked in this order. As in the first embodiment, this structure can reduce the contact resistance between the electrode 11 and the first solid electrolyte membrane 12 and can improve the power-generation efficiency of electrochemical devices, such as fuel cells. Similarly, the membrane electrode assembly 40 according to the third embodiment has a structure in which the electrode 11, the first solid electrolyte membrane 12, the second solid electrolyte membrane 13, and the anode electrode 14 are stacked in this order. As in the first and second embodiments, this structure can reduce the contact resistance between the electrode 11 and the first solid electrolyte membrane 12 and can improve the power-generation efficiency of electrochemical devices, such as fuel cells.

### Examples

Next, the following description will provide, as Examples, the evaluation method for concluding that the power-generation efficiency is high when the membrane electrode assemblies 10, 20, 30, and 40 according to the first, second, and third embodiments and the modification of the third embodiment include a combination of the electrode formed by using at least one compound (oxide ion-electron mixed conductor) selected from the group consisting of LSC, LSCF, and LSF, and the first solid electrolyte membrane 12 represented by a composition formula of BaZr₁₋ₓLuₓO_{3-δ} (with x = 0.2 and δ = 0.1).

First, an evaluation membrane electrode assembly 100 illustrated in Fig. 5 was prepared in order to carry out this evaluation method. Fig. 5 is a schematic diagram illustrating the structure of the evaluation membrane electrode assembly 100 according to Examples of the present disclosure. This evaluation membrane electrode assembly 100 was used to carry out electrochemical measurement. The evaluation membrane electrode assembly 100 illustrated in Fig. 5 includes two electrodes 11 and a first solid electrolyte membrane 12. The first solid electrolyte membrane 12 has a first surface in contact with one of the electrodes 11 and a second surface, which is a surface opposite to the first surface, in contact with the other one of the electrodes 11. The electrode 11, the first solid electrolyte membrane 12, and the electrode 11 are stacked in this order.

Oxide ion-electron mixed conductors having typical compositions of La_{0.6}Sr_{0.4}CoO_{3-δ} for LSC, La_{0.6}Sr_{0.4}Co_{0.2}Fe_{0.8}O_{3-δ} for LSCF, and La_{0.6}Sr_{0.4}FeO_{3-δ} for LSF were used to form the electrodes 11. In addition to these conductors, LaNi_{0.6}Fe_{0.4}O_{3-δ} (hereinafter referred to as LNF) and La₂NiO_{4+δ}, which are promising materials for cathode electrodes in solid oxide fuel cells, were also added to evaluation targets in these Examples.

BaZr₁₋ₓLuₓO_{3-δ} having a typical composition of BaZr_{0.8}Lu_{0.2}O_{2.90} was used to form the first solid electrolyte membrane 12. The cases where the first solid electrolyte membrane 12 was formed of BaZrYO₃, which was another example of the solid electrolyte having proton conductivity, were also added to evaluation targets. BaZrYO₃ having a typical composition of BaZr_{0.8}Y_{0.2}O_{2.90} was used.

As described below, three evaluation membrane electrode assemblies in Examples 1 to 3 were prepared as evaluation targets.
[Example 1] Evaluation membrane electrode assembly 100 including electrodes 11 made of La_{0.6}Sr_{0.4}CoO_{3-δ} and first solid electrolyte membrane 12 made of BaZr_{0.8}Lu_{0.2}O_{2.90}
[Example 2] Evaluation membrane electrode assembly 100 including electrodes 11 made of La_{0.6}Sr_{0.4}Co_{0.2}Fe_{0.8}O_{3-δ} and first solid electrolyte membrane 12 made of BaZr_{0.8}Lu_{0.2}O_{2.90}
[Example 3] Evaluation membrane electrode assembly 100 including electrodes 11 made of La_{0.6}Sr_{0.4}FeO_{3-δ} and first solid electrolyte membrane 12 made of BaZr_{0.8}Lu_{0.2}O_{2.90}
Evaluation membrane electrode assemblies in Comparative Examples 1 to 7 were prepared as targets to be compared with those in Examples 1 to 3 and evaluated.
[Comparative Example 1] Evaluation membrane electrode assembly 100 including electrodes 11 made of LaNi_{0.6}Fe_{0.4}O_{3-δ} and first solid electrolyte membrane 12 made of BaZr_{0.8}Lu_{0.2}O_{2.90}
[Comparative Example 2] Evaluation membrane electrode assembly 100 including electrodes 11 made of La₂NiO_{4+δ} and first solid electrolyte membrane 12 made of BaZr_{0.8}Lu_{0.2}O_{2.90}
[Comparative Example 3] Evaluation membrane electrode assembly 100 including electrodes 11 made of La_{0.6}Sr_{0.4}CoO_{3-δ} and first solid electrolyte membrane 12 made of BaZr_{0.8}Y_{0.2}O_{2.90}
[Comparative Example 4] Evaluation membrane electrode assembly 100 including electrodes 11 made of La_{0.6}Sr_{0.4}CO_{0.2}Fe_{0.8}O_{3-δ} and first solid electrolyte membrane 12 made of BaZr_{0.8}Y_{0.2}O_{2.90}
[Comparative Example 5] Evaluation membrane electrode assembly 100 including electrodes 11 made of La_{0.6}Sr_{0.4}FeO_{3-δ} and first solid electrolyte membrane 12 made of BaZr_{0.8}Y_{0.2}O_{2.90}
[Comparative Example 6] Evaluation membrane electrode assembly 100 including electrodes 11 made of LaNi_{0.6}Fe_{0.4}O_{3-δ} and first solid electrolyte membrane 12 made of BaZr_{0.8}Y_{0.2}O_{2.90}
[Comparative Example 7] Evaluation membrane electrode assembly 100 including electrodes 11 made of La₂NiO_{4+δ} and first solid electrolyte membrane 12 made of BaZr_{0.8}Y_{0.2}O_{2.90}

### Production of Evaluation Membrane Electrode Assembly

Hereinafter, a method for producing evaluation membrane electrode assemblies 100 in Examples 1 to 3 and Comparative Examples 1 to 7 will be described.

BaZr_{0.8}Lu_{0.2}O_{2.90} to form the first solid electrolyte membrane 12 was prepared by a citric acid complex method using a powder of Ba(NO₃)₂ (available from Kanto Chemical Co., Inc.), a powder of ZrO(NO₃)₂·2H₂O (available from Kanto Chemical Co., Inc.), and a powder of Lu(NO₃)₃·5H₂O (available from Kojundo Chemical Laboratory Co., Ltd.) as starting materials. In the preparation of BaZr_{0.8}Y_{0.2}O_{2.90}, Y(NO₃)₃·6H₂O (available from Kojundo Chemical Laboratory Co., Ltd.) was used as a starting material instead of Lu(NO₃)₃·5H₂O. A predetermined amount of each powder was dissolved in distilled water, and 1.0 equivalent of citric acid monohydrate (available from Kanto Chemical Co., Inc.) and 0.7 equivalents of ethylenediaminetetraacetic acid (EDTA) (available from Kanto Chemical Co., Inc.) based on the metal cations were added. The pH was then adjusted to 7 by using ammonia water (28%) (available from Kanto Chemical Co., Inc.). After pH adjustment, the solvent was removed at 90°C by using a hotplate stirrer. The obtained solid was ground with a mortar, followed by degreasing at about 600°C.

After degreasing, the resulting powder was press-molded in a cylindrical shape and calcined at 1200°C for 10 hours. After calcination, the roughly ground powder was placed in a plastic container together with zirconia balls, and ethanol was added, followed by grinding with a ball mill for 3 days or longer.

After grinding with the ball mill, the solvent was removed by lamp drying, and the obtained powder was vacuum-dried at 200°C. In the preparation of BaZr_{0.8}Lu_{0.2}O_{2.90} and BaZr_{0.8}Y_{0.2}O_{2.90} after vacuum drying, the powder was formed into pellets by cold isostatic pressing at a press pressure of 200 MPa and fired at 1750°C for 24 hours to obtain a sintered product. The obtained sintered product was then machined into a disk shape, and the surface of the disk-shaped product was polished with a wrapping film sheet coated with 3-µm abrasive grains to obtain a first solid electrolyte membrane 12.

La_{0.6}Sr_{0.4}CoO_{3-δ} to form the electrodes 11 in Example 1 and Comparative Example 3 was prepared by a citric acid complex method using a powder of La(NO₃)₃·6H₂O (available from Kanto Chemical Co., Inc.), a power of Sr(NO₃)₂ (available from Kanto Chemical Co., Inc.), and a power of Co(NO₃)₂·6H₂O (available from Kanto Chemical Co., Inc.) as starting materials. A predetermined amount of each powder was dissolved in distilled water, and 1.0 equivalent of citric acid monohydrate (available from Kanto Chemical Co., Inc.) and 0.7 equivalents of ethylenediaminetetraacetic acid (EDTA) (available from Kanto Chemical Co., Inc.) based on the metal cations were added. The pH was then adjusted to 7 by using ammonia water (28%) (available from Kanto Chemical Co., Inc.). After pH adjustment, the solvent was removed at 90°C by using a hotplate stirrer. The obtained solid was ground with a mortar, followed by degreasing at about 600°C.

After degreasing, the obtained powder was calcined at 850°C for 5 hours. After calcination, the roughly ground powder was placed in a plastic container together with zirconia balls, and polyethylene glycol 400 (available from Wako Pure Chemical Industries) and isopropyl alcohol were added, followed by grinding with a ball mill for 24 hours or longer.

After grinding with the ball mill, isopropyl alcohol was removed by heating to 120°C with a hotplate stirrer to obtain a slurry of La_{0.6}Sr_{0.4}CoO_{3-δ}.

La_{0.6}Sr_{0.4}Co_{0.2}Fe_{0.8}O_{3-δ} to form the electrodes 11 in Example 2 and Comparative Example 4 was prepared by a citric acid complex method using a powder of La(NO₃)₃·6H₂O (available from Kanto Chemical Co., Inc.), a power of Sr(NO₃)₂ (available from Kanto Chemical Co., Inc.), a power of Co(NO₃)₂·6H₂O (available from Kanto Chemical Co., Inc.), and a powder of Fe(NO₃)₃·9H₂O (available from Kanto Chemical Co., Inc.) as starting materials. A predetermined amount of each powder was dissolved in distilled water, and 1.0 equivalent of citric acid monohydrate (available from Kanto Chemical Co., Inc.) and 0.7 equivalents of ethylenediaminetetraacetic acid (EDTA) (available from Kanto Chemical Co., Inc.) based on the metal cations were added. The pH was then adjusted to 7 by using ammonia water (28%) (available from Kanto Chemical Co., Inc.). After pH adjustment, the solvent was removed at 90°C by using a hotplate stirrer. The obtained solid was ground with a mortar, followed by degreasing at about 600°C.

After degreasing, the obtained powder was calcined at 850°C for 5 hours. After calcination, the roughly ground powder was placed in a plastic container together with zirconia balls, and polyethylene glycol 400 (available from Wako Pure Chemical Industries) and isopropyl alcohol were added, followed by grinding with a ball mill for 24 hours or longer. After grinding with the ball mill, isopropyl alcohol was removed by heating to 120°C with a hotplate stirrer to obtain a slurry of La_{0.6}Sr_{0.4}Co_{0.2}Fe_{0.8}O_{3-δ}.

La_{0.6}Sr_{0.4}FeO_{3-δ} to form the electrodes 11 in Example 3 and Comparative Example 5 was prepared by a citric acid complex method using a powder of La(NO₃)₃·6H₂O (available from Kanto Chemical Co., Inc.), a power of Sr(NO₃)₂ (available from Kanto Chemical Co., Inc.), and a power of Fe(NO₃)₃·9H₂O (available from Kanto Chemical Co., Inc.) as starting materials. A predetermined amount of each powder was dissolved in distilled water, and 1.0 equivalent of citric acid monohydrate (available from Kanto Chemical Co., Inc.) and 0.7 equivalents of ethylenediaminetetraacetic acid (EDTA) (available from Kanto Chemical Co., Inc.) based on the metal cations were added. The pH was then adjusted to 7 by using ammonia water (28%) (available from Kanto Chemical Co., Inc.). After pH adjustment, the solvent was removed at 90°C by using a hotplate stirrer. The obtained solid was ground with a mortar, followed by degreasing at about 600°C.

After degreasing, the obtained powder was calcined at 850°C for 5 hours. After calcination, the roughly ground powder was placed in a plastic container together with zirconia balls, and polyethylene glycol 400 (available from Wako Pure Chemical Industries) and isopropyl alcohol were added, followed by grinding with a ball mill for 24 hours or longer. After grinding with the ball mill, isopropyl alcohol was removed by heating to 120°C with a hotplate stirrer to obtain a slurry of La_{0.6}Sr_{0.4}FeO_{3-δ}.

LaNi_{0.6}Fe_{0.4}O_{3-δ} to form the electrodes 11 in Comparative Example 1 and Comparative Example 6 was prepared by a citric acid complex method using a powder of La(NO₃)₃·6H₂O (available from Kanto Chemical Co., Inc.), a powder of Ni(NO₃)₂·6H₂O (available from Kanto Chemical Co., Inc.), and a powder of Fe(NO₃)₃·9H₂O (available from Kanto Chemical Co., Inc.) as starting materials. A predetermined amount of each powder was dissolved in distilled water, and 1.0 equivalent of citric acid monohydrate (available from Kanto Chemical Co., Inc.) and 0.7 equivalents of ethylenediaminetetraacetic acid (EDTA) (available from Kanto Chemical Co., Inc.) based on the metal cations were added. The pH was then adjusted to 7 by using ammonia water (28%) (available from Kanto Chemical Co., Inc.). After pH adjustment, the solvent was removed at 90°C by using a hotplate stirrer. The obtained solid was ground with a mortar, followed by degreasing at about 600°C.

After degreasing, the obtained powder was calcined at 850°C for 5 hours. After calcination, the roughly ground powder was placed in a plastic container together with zirconia balls, and polyethylene glycol 400 (available from Wako Pure Chemical Industries) and isopropyl alcohol were added, followed by grinding with a ball mill for 24 hours or longer. After grinding with the ball mill, isopropyl alcohol was removed by heating to 120°C with a hotplate stirrer to obtain a slurry of LaNi_{0.6}Fe_{0.4}O_{3-δ}.

La₂NiO_{4+δ} to form the electrodes 11 in Comparative Example 2 and Comparative Example 7 was prepared by a citric acid complex method using a powder of La(NO₃)₃·6H₂O (available from Kanto Chemical Co., Inc.) and a power of Ni(NO₃)₂·6H₂O (available from Kanto Chemical Co., Inc.) as starting materials. A predetermined amount of each powder was dissolved in distilled water, and 1.3 equivalents of citric acid monohydrate (available from Kanto Chemical Co., Inc.) and ethylenediaminetetraacetic acid (EDTA) (available from Kanto Chemical Co., Inc.) based on the metal cations were added. The pH was then adjusted to 7 by using ammonia water (28%) (available from Kanto Chemical Co., Inc.). After pH adjustment, the solvent was removed at 90°C by using a hotplate stirrer. The obtained solid was ground with a mortar, followed by degreasing at about 600°C.

After degreasing, the obtained powder was calcined at 900°C for 5 hours. After calcination, the roughly ground powder was placed in a plastic container together with zirconia balls, and polyethylene glycol 400 (available from Wako Pure Chemical Industries) and isopropyl alcohol were added, followed by grinding with a ball mill for 24 hours or longer. After grinding with the ball mill, isopropyl alcohol was removed by heating to 120°C with a hotplate stirrer to obtain a slurry of La₂NiO_{4+δ}.

As described above, the first solid electrolyte membranes 12 and the electrodes 11 for use in Examples 1 to 3 and Comparative Examples 1 to 7 were produced. The slurry for the electrodes 11 was then applied to both sides of the first solid electrolyte membrane 12 by screen printing. The coating area for the electrode 11 was 0.785 cm². The electrodes 11 were attached to the first solid electrolyte membrane 12 by firing at 950°C for 2 hours to produce an evaluation membrane electrode assembly 100.

In actual measurement of the contact resistance in the first solid electrolyte membrane 12, the evaluation membrane electrode assembly 100 illustrated in Fig. 5 in which Ag was used for the electrodes 11 was prepared to stably measure the contact resistance. In other words, the electrolyte resistance indicated by the correlation between the thickness of the first solid electrolyte membrane 12 and the ohmic resistance (IR resistance) is assumed to also show the same relationship when the electrodes 11 are made of LSC, LSCF, LSF, LNF, or LaNiO_{4+δ} and when the electrodes are made of Ag. Since the use of Ag exhibits a substantially zero contact resistance and enables stable measurement of the relationship between the thickness of the first solid electrolyte membrane 12 and the ohmic resistance (IR resistance), Ag is used for the electrodes 11. The correlation between the thickness of the first solid electrolyte membrane 12 and the ohmic resistance (IR resistance) obtained when the electrodes 11 are made of Ag is used to obtain the contact resistance in the first solid electrolyte membrane when the electrodes 11 are made of LSC, LSCF, LSF, LNF, or LaNiO_{4+δ}. A more specific calculation method will be described below. The evaluation membrane electrode assembly 100 including the electrodes 11 made of Ag was obtained by applying an Ag paste (available from Tanaka Kikinzoku Kogyo K.K.) to both sides of the first solid electrolyte membrane 12 and performing firing at 900°C for 1 hour. Measurement of Contact Resistance

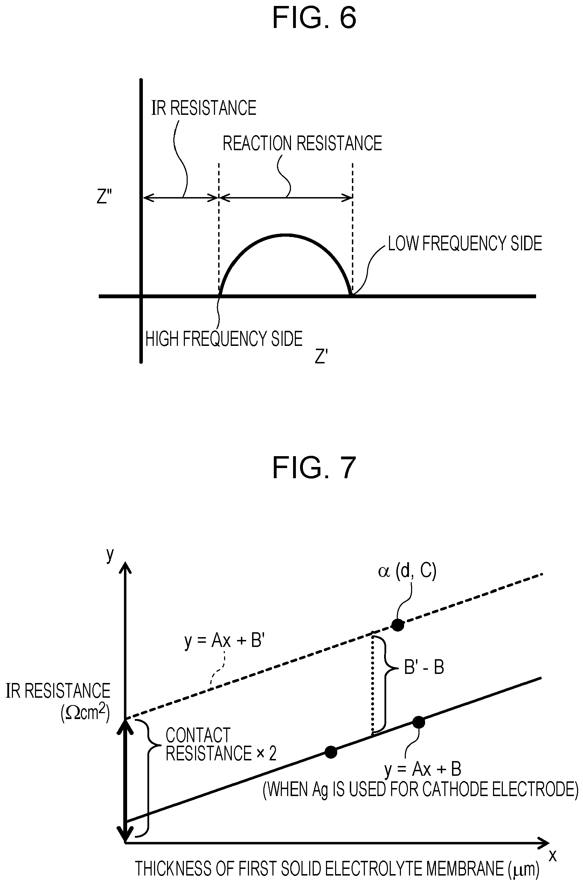

Next, a method for measuring the contact resistance between the electrode 11 and the first solid electrolyte membrane 12 in the evaluation membrane electrode assembly 100 produced by the above-mentioned production method will be described with reference to Fig. 7. Fig. 7 illustrates a graph showing an example of the correlation between the IR resistance and the thickness of the first solid electrolyte membrane 12 according to Examples of the present disclosure and Comparative Examples. In Fig. 7, a solid line indicates the correlation between the IR resistance and the thickness of the first solid electrolyte membrane 12 when Ag is used for the electrodes 11. A dotted line indicates the correlation between the IR resistance and the thickness of the first solid electrolyte membrane 12 according to Examples of the present disclosure and Comparative Examples. The contact resistance between the electrode 11 and the first solid electrolyte membrane 12 in the evaluation membrane electrode assembly 100 was measured by an alternating-current impedance method.

Specifically, the contact resistance was measured for Examples 1 to 3 and Comparative Examples 1 to 7 as described below. First, evaluation membrane electrode assemblies 100 each including the electrodes 11 made of Ag were prepared. These evaluation membrane electrode assemblies 100 each including the electrodes 11 made of Ag and further including the first solid electrolyte membrane 12 having a different thickness were prepared and measured for the contact resistance by an alternating-current impedance method. Next, evaluation membrane electrode assemblies 100 having the same thickness were prepared for Examples 1 to 3 and Comparative Examples 1 to 7. The evaluation membrane electrode assemblies 100 according to Examples 1 to 3 and Comparative Examples 1 to 7 were measured for the contact resistance by an alternating-current impedance method. The thickness of the first solid electrolyte membrane 12 targeted for measurement was in the range from about 250 µm to about 1000 µm.

The alternating-current impedance was measured at 600°C in a 20°C humidified air atmosphere. Alternating current was applied by using model 1287, available from Solartron Metrology, at an amplitude of 10 mV and frequencies from 100 kHz to 0.01 Hz. Fig. 6 illustrates the measurement result of the alternating-current impedance based on the Cole-Cole plot where the horizontal axis represents real component Z' of impedance Z (= Z' + jZ") and the vertical axis represents imaginary component Z". Fig. 6 is a figure illustrating an example of the measurement result of the alternating-current impedance according to Examples of the present disclosure by using the Cole-Cole plot. Fig. 6 schematically illustrates the details of the resistance based on the measurement of the alternating-current impedance. With regard to the arc in the range of frequencies from about 1000 Hz to about 0.01 Hz in the Cole-Cole plot, the intersection of the arc and the axis of the real component (Z') on the high frequency side indicates the IR resistance, and the length of the chord formed by the arc and the axis of the real component, that is, the distance between two intersections of the arc and the axis of the real component indicates the reaction resistance. The IR resistance includes the electrolyte resistance, which is the resistance of the first solid electrolyte membrane 12 itself, and the contact resistance, which is the resistance between the first solid electrolyte membrane 12 and the electrode 11. The IR resistance also includes the electrode resistance, which is the resistance of the electrode 11 itself, but the electrode resistance is negligible.

Before obtaining the contact resistance between each electrode 11 and each first solid electrolyte membrane 12 for Examples 1 to 3 and Comparative Examples 1 to 7, various evaluation membrane electrode assemblies 100 each including the electrodes 11 made of Ag and the first solid electrolyte membrane 12, the thickness of each first solid electrolyte membrane 12 being different for each respective evaluation membrane electrode assembly 100, were first prepared and measured for the contact resistance by an alternating-current impedance method. Next, evaluation membrane electrode assemblies 100 according to Examples 1 to 3 and Comparative Examples 1 to 7 were measured for the contact resistance by an alternating-current impedance method.

The electrolyte resistance included in the IR resistance increases in proportion to the thickness of the first solid electrolyte membrane 12. The correlation between the IR resistance and the thickness of the first solid electrolyte membrane 12 was determined for the evaluation membrane electrode assemblies 100 each including the electrodes 11 made of Ag by measuring the IR resistance as a function of the thickness of the first solid electrolyte membranes 12. As a result, as shown in Fig. 7 where the horizontal axis represents the thickness (µm) of the first solid electrolyte membrane 12, and the vertical axis represents the IR resistance (Ωcm²), the relationship between the thickness of the first solid electrolyte membrane 12 and the IR resistance is approximated by a linear function (y = Ax + B). The slope of the linear function corresponds to the electrolyte resistance of the first solid electrolyte membrane 12. Half of the B value at a y-intercept corresponds to the contact resistance in the evaluation membrane electrode assembly 100 including the electrodes 11 made of Ag.

Subsequently, the evaluation membrane electrode assemblies 100 according to Examples 1 to 3 and Comparative Examples 1 to 7 were evaluated for the IR resistance C at the thickness d of the first solid electrolyte membrane 12 (α(d, C) in Fig. 7). The correlation between the thickness of the membrane and the IR resistance is assumed to be the same when the electrodes 11 are made of Ag and when the electrodes are made of the electrode materials according to Examples 1 to 3 and Comparative Examples 1 to 7. Because of this, the correlation between the measured IR resistance in the evaluation membrane electrode assembly 100 and the thickness of the first solid electrolyte membrane 12 can be approximated by a linear function (y = Ax + B'), which has slope A and passes through the point α(d, C). In addition, B' can be obtained by calculating a displacement (B' - B) in the vertical axis direction from the linear function (y = Ax + B) which indicates the relationship between the IR resistance (Ωcm²) and the thickness (µm) of the first solid electrolyte membrane 12 in the evaluation membrane electrode assembly 100 including the electrodes 11 made of Ag. Half of the B' value can be regarded as a contact resistance between the electrode 11 and the first solid electrolyte membrane 12 in Examples 1 to 3 and Comparative Examples 1 to 7.

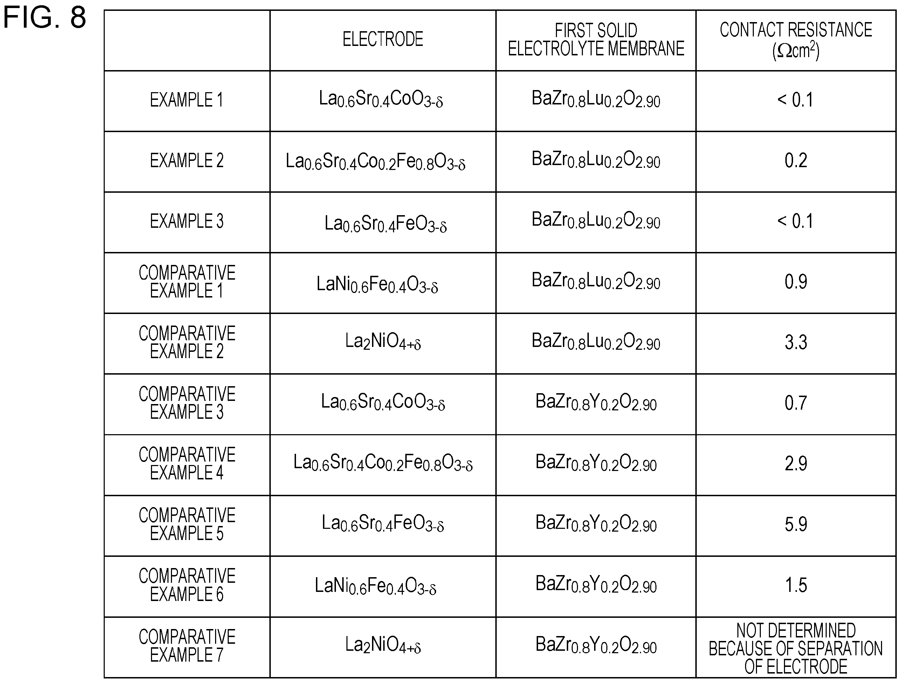

The results obtained by the method for measuring the contact resistance are shown in Table of Fig. 8. Fig. 8 illustrates the table showing the contact resistance in Examples 1 to 3 of the present disclosure and the contact resistance in Comparative Examples 1 to 7. Fig. 8 shows that the contact resistances in Examples 1 to 3, where the electrodes 11 are made of La_{0.6}Sr_{0.4}CoO_{3-δ}, La_{0.6}Sr_{0.4}Co_{0.2}Fe_{0.8}O_{3-δ}, and La_{0.6}Sr_{0.4}FeO_{3-δ} and the first solid electrolyte membrane 12 is made of BaZr_{0.8}Lu_{0.2}O_{2.90} are 0.1 Ωcm² or less, 0.2 Ωcm², and 0.1 Ωcm² or less, respectively. These contact resistances are lower than the contact resistance (0.7 Ωcm²) in the case of Comparative Example 3 where the electrodes are made of La_{0.6}Sr_{0.4}CoO_{3-δ} and the first solid electrolyte membrane 12 is made of BaZr_{0.8}Y_{0.2}O_{2.90}, that is, the case of the structure including a combination of electrodes and a solid electrolyte membrane as disclosed in Patent Literature 1. The contact resistances in Comparative Examples 1 and 2 and Comparative Examples 4 to 6 are found to be larger than 0.7. In particular, the results of Comparative Examples 1 and 2 indicate that the contact resistance obtained when LaNi_{0.6}Fe_{0.4}O_{3-δ} or La₂NiO_{4+δ} is used as a material of the electrode 11 is 0.9 or 3.3 Ωcm², which is larger than the contact resistance in Comparative Example 3, even when the first solid electrolyte membrane 12 is made of BaZr_{0.8}Lu_{0.2}O_{2.90} as in Examples 1 to 3.

A low contact resistance results in a low IR resistance in the membrane electrode assembly. Therefore, when the membrane electrode assembly including a combination of the electrode 11 described in Examples 1 to 3 and the first solid electrolyte membrane 12 is used, for example, in a solid oxide fuel cell, the power-generation efficiency is high.

As a result, the membrane electrode assembly 10 according to the first embodiment, the membrane electrode assembly 20 according to the second embodiment, the membrane electrode assembly 30 according to the third embodiment, and the membrane electrode assembly 40 according to the modification of the third embodiment are low in contact resistance, which is a resistance between the electrode 11 and the first solid electrolyte membrane 12. A low contact resistance can lead to improved power-generation efficiency of electrochemical devices, such as solid oxide fuel cells.

The detailed reason for differences in contact resistance is not clear. However, the differences in contact resistance imply that the diffusion behavior of cations in the interface between the electrode 11 and the first solid electrolyte membrane 12, or a change in IR resistance due to the diffusion behavior differs greatly depending on the type of cations in the electrode 11 and the first solid electrolyte membrane 12.

In Examples 1 to 3 described above, the cases where the electrodes 11 were formed of any one compound selected from LSC, LSCF, and LSF were evaluated. The contact resistance is low even when the electrodes 11 are formed of at least one compound selected from the group consisting of LSC, LSCF, and LSF.

In Examples, the electrode 11 and the first solid electrolyte membrane 12 were synthesized by using the citric acid complex method, but the synthesis method is not limited to this method. For example, the oxides may be synthesized by a solid phase sintering method, a coprecipitation method, a nitrate method, a spray granulation method, or other methods.

The first solid electrolyte membrane 12 is not necessarily strictly made only of a composition of BaZr_{0.8}Lu_{0.2}O_{2.90}. The first solid electrolyte membrane 12 may further contain a small amount of BaZr₁₋ₓ₁M¹ₓ₁O_{3-δ} where M¹ represents at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, and In.

In the method for producing the evaluation membrane electrode assembly 100 in Examples, the evaluation membrane electrode assembly 100 is produced as follows: obtaining the first solid electrolyte membrane 12 from the sintered product of BaZr₁₋ₓLuₓO_{3-δ}; and then applying the slurry for the electrodes 11 to the first solid electrolyte membrane 12 by screen printing, followed by baking. However, the production method is not limited to this method. For example, the evaluation membrane electrode assembly 100 may be produced by, for example, a method involving stacking, as powders or slurries, BaZr₁₋ₓLuₓO_{3-δ} and the second solid electrolyte membrane 13 or a composite of Ni and BaZr₁₋ₓLuₓO_{3-δ}, followed by co-sintering. The electrodes 11 are not necessarily formed by screen printing and may be formed by a tape casting method, a dip coating method, a spin coating method, or other methods.

These methods are not limited to wet methods, and a deposition method, such as a CVD method or a sputtering method, may be employed. Thermal spraying may be used for production.

The membrane electrode assembly 10 of the present disclosure can be used in applications of electrochemical devices, such as fuel cells, gas sensors, hydrogen pumps, and water electrolysis devices.

It will be apparent to those skilled in the art from the above description that the present disclosure includes many modifications and other embodiments. The above description should be considered illustrative only and is provided for the purpose of teaching those skilled in the art the best modes for carrying out the present disclosure.

The membrane electrode assembly according to the present disclosure can be used in applications pertaining to electrochemical devices, such as fuel cells, gas sensors, hydrogen pumps, and water electrolysis devices.

## Claims

1. A membrane electrode assembly (10) comprising:
an electrode (11) consisting of at least one compound selected from the group consisting of lanthanum strontium cobalt complex oxide, lanthanum strontium cobalt iron complex oxide, and lanthanum strontium iron complex oxide, or consisting of a composite of the at least one compound and an electrolyte material; and
a first solid electrolyte membrane (12) represented by a composition formula of BaZr₁₋ₓLuₓO_{3-δ} with x = 0.2 and δ = 0.1,
wherein the electrode (11) is in contact with the first solid electrolyte membrane (12).

2. The membrane electrode assembly (10) according to claim 1, further comprising a second solid electrolyte membrane (13),
wherein the second solid electrolyte membrane (13) is represented by a composition formula of BaZr₁₋ₓ₁M¹ₓ₁O_{3-δ},
where M¹ represents at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, and In, and x₁ satisfies 0 < x₁ < 1,
wherein the first solid electrolyte membrane (12) has a first surface in contact with the electrode (11) and a second surface, which is a surface opposite to the first surface, in contact with the second solid electrolyte membrane (13), and
wherein the electrode (11), the first solid electrolyte membrane (12), and the second solid electrolyte membrane (13) are stacked in this order.

3. The membrane electrode assembly (10) according to claim 1, wherein the electrode (11) is a cathode electrode, and
the membrane electrode assembly (10) further includes an anode electrode (14) containing Ni and a compound represented by any one composition formula selected from the group consisting of BaZr₁₋ₓ₂M²ₓ₂O_{3-δ}, BaCe₁₋ₓ₃M³ₓ₃O_{3-δ}, and BaZr_{1-x4-y4}Ceₓ₄M⁴_{y4}O_{3-δ},
where M², M³, and M⁴ each represent at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu, and x₂, x₃, x₄, and y₄ satisfy 0 < x₂ < 1, 0 < x₃ < 1, 0 < x₄ < 1, and 0 < y₄ < 1, respectively,
the first solid electrolyte membrane (12) has a first surface in contact with the cathode electrode (11) and a second surface, which is a surface opposite to the first surface, in contact with the anode electrode (14), and
the cathode electrode (11), the first solid electrolyte membrane (12), and the anode electrode (14) are stacked in this order.

4. The membrane electrode assembly (10) according to claim 2, wherein the electrode (11) is a cathode electrode, and
the membrane electrode assembly (10) further includes an anode electrode (14) containing Ni and a compound represented by any one composition formula selected from the group consisting of BaZr₁₋ₓ₂M²ₓ₂O_{3-δ}, BaCe₁₋ₓ₃M³ₓ₃O_{3-δ}, and BaZr_{1-x4-y4}Ceₓ₄M⁴_{y4}O_{3-δ},
where M², M³, and M⁴ each represent at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu, and x₂, x₃, x₄, and y₄ satisfy 0 < x₂ < 1, 0 < x₃ < 1, 0 < x₄ < 1, and 0 < y₄ < 1, respectively,
the second solid electrolyte membrane (13) has a first surface in contact with the first solid electrolyte membrane (12) and a second surface, which is a surface opposite to the first surface, in contact with the anode electrode (14), and
the cathode electrode (11), the first solid electrolyte membrane (12), the second solid electrolyte membrane (13), and the anode electrode (14) are stacked in this order.

5. A solid oxide fuel cell comprising the membrane electrode assembly according to any one of claims 1 to 4.

## Patentansprüche

1. Membran-Elektroden-Einheit (10), die umfasst:
eine Elektrode (11), die aus wenigstens einer Verbindung besteht, die aus der Gruppe ausgewählt wird, die aus komplexem Lanthan-Strontium-Cobalt-Oxid, komplexem Lanthan-Strontium-Kobalt-Eisen-Oxid und komplexem Lanthan-Strontium-Eisen-Oxid besteht, oder aus einem Verbundmaterial aus der wenigstens einen Verbindung und einem Elektrolytmaterial besteht;
eine erste Festelektrolyt-Membran (12), die durch eine Zusammensetzungsformel BaZr₁₋ₓLuₓO_{3-δ} repräsentiert wird, wobei x= 0,2 und δ= 1,
und die Elektrode (11) in Kontakt mit der ersten Festelektrolyt-Membran (12) ist.

2. Membran-Elektroden-Einheit (10) nach Anspruch 1, die des Weiteren eine zweite Festelektrolyt-Membran (13) umfasst,
wobei die zweite Festelektrolyt-Membran (13) durch eine Zusammensetzungsformel BaZr₁₋ₓ₁M¹ₓ₁O_{3-δ} repräsentiert wird,
wobei M¹ wenigstens ein Element repräsentiert, das aus der Gruppe ausgewählt wird, die aus La, Pr, Nd, Pm, Sm, Eu, Gd, Tb, Dy, Ho, Er, Tm, Yb, Y, Sc, Mn, Fe, Co, Ni, AI, Ga sowie In besteht, und für x₁ 0 < x₁ < 1 gilt,
die erste Festelektrolyt-Membran (12) eine erste Fläche, die in Kontakt mit der Elektrode (11) ist, und eine zweite Fläche hat, die eine der ersten Fläche gegenüberliegende Fläche ist und in Kontakt mit der zweiten Festelektrolyt-Membran (13) ist, und
die Elektrode (11), die erste Festelektrolyt-Membran (12) und die zweite Festelektrolyt-Membran (13) in dieser Reihenfolge übereinandergeschichtet sind.

3. Membran-Elektroden-Einheit nach Anspruch 1, wobei die Elektrode (11) eine Kathoden-Elektrode ist, und
die Membran-Elektroden-Einheit (10) des Weiteren eine Anoden-Elektrode (14) umfasst, die Ni sowie eine Verbindung enthält, die durch eine beliebige Zusammensetzungsformel repräsentiert wird, die aus der Gruppe ausgewählt wird, die aus BaZr₁₋ₓ₂M²ₓ₂O_{3-δ}, BaCe₁₋ₓ₃M³ₓ₃O_{3-δ}, und BaZr_{1-x4-y4}Ceₓ₄M⁴_{y4}O_{3-δ} besteht,
wobei M², M³, und M⁴ jeweils wenigstens ein Element repräsentieren, das aus der Gruppe ausgewählt wird, die aus La, Pr, Nd, Pm, Sm, Eu, Gd, Tb, Dy, Ho, Er, Tm, Yb, Y, Sc, Mn, Fe, Co, Ni, AI, Ga, In sowie Lu besteht, und für x₂, x₃, x₄, und y₄ jeweils 0 < x₂ < 1, 0 < x₃ < 1, 0 < x₄ < 1, sowie 0 < y₄ < 1 gelten,
die erste Festelektrolyt-Membran (12) eine erste Fläche, die in Kontakt mit der Kathoden-Elektrode (11) ist, und eine zweite Fläche hat, die eine der ersten Fläche gegenüberliegende Fläche ist und in Kontakt mit der Anoden-Elektrode (14) ist, und
die Kathoden-Elektrode (11), die erste Festelektrolyt-Membran (12) und die Anoden-Elektrode (14) in dieser Reihenfolge übereinandergeschichtet sind.

4. Membran-Elektroden-Einheit (10) nach Anspruch 2, wobei die Elektrode (11) eine Kathoden-Elektrode ist, und
die Membran-Elektroden-Einheit (10) des Weiteren eine Anoden-Elektrode (14) umfasst, die Ni sowie eine Verbindung enthält, die durch eine beliebige Zusammensetzungsformel repräsentiert wird, die aus der Gruppe ausgewählt wird, die aus BaZr₁₋ₓ₂M²ₓ₂O_{3-δ}, BaCe₁₋ₓ₃M³ₓ₃O_{3-δ} und BaZr_{1-x4-y4}Ceₓ₄M⁴_{y4}O_{3-δ} besteht,
wobei M², M³, und M⁴ jeweils wenigstens ein Element repräsentieren, das aus der Gruppe ausgewählt wird, die aus La, Pr, Nd, Pm, Sm, Eu, Gd, Tb, Dy, Ho, Er, Tm, Yb, Y, Sc, Mn, Fe, Co, Ni, AI, Ga, In sowie Lu besteht, und für x₂, x₃, x₄, und y₄ jeweils 0 < x₂ < 1, 0 < x₃ < 1, 0 < x₄ < 1, sowie 0 < y₄ < 1 gelten,
die zweite Festelektrolyt-Membran (13) eine erste Fläche, die in Kontakt mit der ersten Festelektrolyt-Membran (12) ist, und eine zweite Fläche hat, die eine der ersten Fläche gegenüberliegende Fläche ist und in Kontakt mit der Anoden-Elektrode (14) ist, und
die Kathoden-Elektrode (11), die erste Festelektrolyt-Membran (12), die zweite Festelektrolyt-Membran (13) und die Anoden-Elektrode (14) in dieser Reihenfolge übereinandergeschichtet sind.

5. Festelektrolyt-Brennstoffzelle, die die Membran-Elektroden-Einheit nach einem der Ansprüche 1 bis 4 umfasst.

## Revendications

1. Ensemble électrode à membrane (10) comprenant :
une électrode (11) constituée d'au moins un composé choisi parmi le groupe constitué d'oxyde de complexe lanthane-strontium-cobalt, d'oxyde de complexe lanthane-strontium-cobalt-fer, et d'oxyde de complexe lanthane-strontium-fer, ou constituée d'un composite du au moins un composé et d'un matériau électrolytique ; et
une première membrane d'électrolyte solide (12) représentée par une formule de composition BaZr₁₋ₓLuₓO_{3-δ} avec x = 0,2 et δ = 0,1,
dans lequel l'électrode (11) est en contact avec la première membrane d'électrolyte solide (12).

2. Ensemble électrode à membrane (10) selon la revendication 1, comprenant en outre une seconde membrane d'électrolyte solide (13),
dans lequel la seconde membrane d'électrolyte solide (13) est représentée par une formule de composition BaZr₁₋ₓ₁M¹ₓ₁O_{3-δ},
où M¹ représente au moins un élément sélectionné parmi le groupe constitué de La, Pr, Nd, Pm, Sm, Eu, Gd, Tb, Dy, Ho, Er, Tm, Yb, Y, Sc, Mn, Fe, Co, Ni, Al, Ga, et In et x₁ satisfait à 0 < x₁ < 1,
dans lequel la première membrane d'électrolyte solide (12) a une première surface en contact avec l'électrode (11) et une seconde surface, qui est une surface opposée à la première surface, en contact avec la seconde membrane d'électrolyte solide (13), et dans lequel l'électrode (11), la première membrane d'électrolyte solide (12), et la seconde membrane d'électrolyte solide (13) sont empilées dans cet ordre.

3. Ensemble électrode à membrane (10) selon la revendication 1, dans lequel l'électrode (11) est une électrode cathodique, et
l'ensemble électrode à membrane (10) comprend en outre une électrode anodique (14) contenant Ni et un composé représenté par une quelconque formule de composition choisie parmi le groupe constitué de BaZr₁₋ₓ₂M²ₓ₂O_{3-δ}, BaCe₁₋ₓ₃M³ₓ₃O_{3-δ}, et BaZr_{1-x4-y4}Ceₓ₄M⁴_{y4}O_{3-δ},
où M², M³, et M⁴ représentent chacun au moins un élément choisi parmi le groupe constitué de La, Pr, Nd, Pm, Sm, Eu, Gd, Tb, Dy, Ho, Er, Tm, Yb, Y, Sc, Mn, Fe, Co, Ni, Al, Ga, In et Lu, et x₂, x₃, x₄ et y₄ satisfont à 0 < x₂ < 1, 0 < x₃ < 1, 0 < x₄ < 1 et 0 < y₄ < 1, respectivement,
la première membrane d'électrolyte solide (12) a une première surface en contact avec l'électrode cathodique (11) et une seconde surface, qui est une surface opposée à la première surface, en contact avec l'électrode anodique (14), et
l'électrode cathodique (11), la première membrane d'électrolyte solide (12), et l'électrode anodique (14) sont empilées dans cet ordre.

4. Ensemble électrode à membrane (10) selon la revendication 2, dans lequel l'électrode (11) est une électrode cathodique, et
l'ensemble électrode à membrane (10) comprend en outre une électrode anodique (14) contenant Ni et un composé représenté par une quelconque formule de composition choisie parmi le groupe constitué de BaZr₁₋ₓ₂M²ₓ₂O_{3-δ}, BaCe₁₋ₓ₃M³ₓ₃O_{3-δ}, et BaZr_{1-x4-y4}Ceₓ₄M⁴_{y4}O_{3-δ},
où M², M³ et M⁴ représentent chacun au moins un élément choisi parmi le groupe constitué de La, Pr, Nd, Pm, Sm, Eu, Gd, Tb, Dy, Ho, Er, Tm, Yb, Y, Sc, Mn, Fe, Co, Ni, Al, Ga, In et Lu, et x₂, x₃, x₄ et y₄ satisfont à 0 < x₂ < 1, 0 < x₃ < 1, 0 < x₄ < 1 et 0 < y₄ < 1, respectivement,
la seconde membrane d'électrolyte solide (13) a une première surface en contact avec la première membrane d'électrolyte solide (12) et une seconde surface, qui est une surface opposée à la première surface, en contact avec l'électrode anodique (14), et l'électrode cathodique (11), la première membrane d'électrolyte solide (12), la seconde membrane d'électrolyte solide (13), et l'électrode anodique (14) sont empilées dans cet ordre.

5. Pile à combustible à oxyde solide comprenant l'ensemble électrode à membrane selon l'une quelconque des revendications 1 à 4.
